# EUROPEAN PATENT SPECIFICATION

(11) **EP 4 336 081 B1**
(45) Date of publication and mention of the grant of the patent: **25.02.2026**
(21) Application number: 22857429.9
(22) Date of filing: 23.06.2022
(51) Int. Cl.: F16L 37/08, F16L 37/091, F16L 37/092, F16L 21/08, F16L 37/088

(54) **PIPELINE SUPPLY SYSTEM AND PIPELINE CONNECTION STRUCTURE THEREOF**
ROHRLEITUNGSVERSORGUNGSSYSTEM UND ROHRLEITUNGSVERBINDUNGSSTRUKTUR DAFÜR
SYSTÈME D'ALIMENTATION DE PIPELINE ET STRUCTURE DE RACCORDEMENT DE PIPELINE ASSOCIÉE

(30) Priority: 18.08.2021 CN 202110946881
(43) Date of publication of application: 13.03.2024
(73) Proprietor: Rifeng Enterprise (Foshan) Co., Ltd., Sanshui Foshan, Guangdong 528100 (CN); Rifeng Enterprise Group Co., Ltd., Foshan, Guangdong 528000 (CN); Rifeng Technology Co., Ltd., Foshan, Guangdong 528000 (CN)
(72) Inventor: LIN, Xiyong, Foshan, Guangdong 528000 (CN); DIAO, Zhenbin, Foshan, Guangdong 528000 (CN); CAO, Huijian, Foshan, Guangdong 528000 (CN); LUO, Fei, Foshan, Guangdong 528000 (CN); CHENG, Jiajia, Foshan, Guangdong 528000 (CN); HE, Wangzhi, Foshan, Guangdong 528000 (CN)
(74) Representative: Hautier IP - MC/EP
(86) International application number: PCT/CN2022/100836
(87) International publication number: WO 2023/020116

(56) References cited:
- EP-A1- 1 236 947
- EP-A1- 2 949 984
- EP-A1- 2 949 984
- EP-A2- 0 735 306
- WO-A1-2007/042832
- CN-A- 113 738 976
- CN-U- 216 520 195
- DE-A1- 10 212 735
- DE-U1- 29 610 385
- JP-A- 2000 161 563
- US-A1- 2020 096 145
- US-B2- 10 550 972

## Description

### Cross-reference to Related Applications

The present disclosure claims the priority to the Chinese patent application with the filling No. 202110946881.6 filed with the Chinese Patent Office on August 18, 2021, and entitled "Pipeline Supply System and Pipeline Connection Structure Thereof".

### Technical Field

The present disclosure relates to the technical field of water transportation equipment, in particular to a pipeline supply system and pipeline connection structure thereof.

### Background Art

Currently, the main methods of pipeline connection are threaded connection and heat fusion connection. A threaded connection is formed by forming external threads on an outer surface of one pipeline end and internal threads on the inner wall of another pipeline end, and connecting the two pipelines by engaging the internal and external threads; and a heat fusion connection is formed by heating connecting parts of the pipe and the joint to a molten state by using electrical heating, and then pressing them together, thereby allowing the contact surfaces of the same material to melt and create a connection and seal between the contact surfaces. The above two connection methods are complicated to operate and the pipeline construction efficiency is low. For example, EP2949984A1 discloses a rapid-action coupling for pipes; US2017102102A1 and US10550972B2 disclose a mechanical fitting for plastic pipe and method for making same; US2020096145A1 discloses a pipe fitting joint assembly; and DE29610385U1 discloses a plug-in coupling for pipes.

### Summary

Based on this, it is necessary to provide, in response to the above problem, a pipeline supply system and a pipeline connection structure thereof for which pipeline connection operation is convenient.

There is provided a pipeline connection structure according to claim 1.

The pipeline connection structure comprises a connecting body and a casing. The connecting body is provided therein with a flow cavity, wherein the flow cavity is configured to communicate with the pipe cavity of the pipeline. One end of the casing is a casing end, and another end of the casing is a connecting end. A connecting cavity is provided within the casing, and the connecting cavity extends through the casing end to form a casing port. The casing port is configured for the penetration of the pipeline, and the casing end is configured to be snapped onto the pipeline. The connecting cavity extends through the connecting end to form a connecting port. The connecting body inserts through the connecting port into the connecting cavity, and the connecting end can be snapped onto the connecting body.

The pipeline connection structure further comprises a convex ring. The convex ring is arranged on an inner wall of a portion of the connecting cavity located on the connecting end.

A connecting groove is formed on an outer surface of the connecting body, and the convex ring can be snapped into the connecting groove. An outer diameter size of the convex ring is larger than an outer diameter size of the connecting body.

The convex ring is a C-shaped threaded convex ring, and the C-shaped threaded convex ring can undergo elastic deformation under force. One side of the C-shaped threaded convex ring is provided with an opening, and the size of the opening is smaller than the outer diameter size of the connecting body. The connecting body is inserted through the opening and arranged inside the C-shaped threaded convex ring. An outer surface of the C-shaped threaded convex ring is provided with external threads, and an inner wall of a portion of the connecting cavity, located on the connecting end, is provided with internal threads. The external threads and the internal threads can engage with each other.

In one of the embodiments, the pipeline connection structure further comprises an inner supporting member, wherein one end of the inner supporting member is configured to be inserted into the pipe cavity of the pipeline, and another end of the inner supporting member can be snapped inside the flow cavity. The inner supporting member is provided therein with an inner cavity, and the flow cavity of the connection assembly communicates with the pipe cavity of the pipeline through the inner cavity.

In one of the embodiments, the pipeline connection structure also comprises a positioning ring. The positioning ring is configured to be sleeved on the pipeline. The positioning ring is snapped on the inner wall of the connecting cavity. An inner diameter size of the positioning ring is smaller than the outer diameter size of the pipeline. The positioning ring can undergo elastic deformation under force, and after elastic deformation, the inner diameter size of the positioning ring is larger than the outer diameter size of the pipeline.

In one of the embodiments, an inner diameter size of a portion of the connecting cavity, located at the casing end, gradually decreases in the direction from the casing end toward the casing port. The outer diameter size of the positioning ring is larger than the inner diameter size of the connecting cavity located at the casing end.

In one of the embodiments, the pipeline connection structure further comprises a pressure sleeve, wherein the pressure sleeve can be movably arranged inside the connecting cavity. A movement direction of the pressure sleeve is along the axis of the pipeline. The pressure sleeve can be configured to be sleeved on the pipeline, and one end of the pressure sleeve, away from the casing end, can abut against the inner wall of the positioning ring, thus inducing elastic deformation in the positioning ring when the pressure sleeve moves.

In another embodiment, an outer wall of the other end of the inner supporting member snapped in the flow cavity is provided with a convex tooth structure; an inner wall of the flow cavity is provided with a tooth groove corresponding to the convex tooth structure; and the convex tooth structure can be snapped into the tooth groove.

Optionally, an inner wall of the flow cavity is provided with a convex tooth structure, and an outer wall of the other end of the inner supporting member snapped in the flow cavity is provided with a tooth groove corresponding to the convex tooth structure; and the convex tooth structure can be snapped into the tooth groove.

A pipeline supply system comprises a pipeline and the pipeline connection structure as described above. The pipeline is provided therein with a pipe cavity. The pipeline is inserted through the casing port, and the casing end is snapped onto the pipeline. The pipe cavity is in communication with the flow cavity.

In the pipeline supply system and its pipeline connection structure mentioned above, when it is necessary to connect the pipeline, the connecting body is inserted through the connecting port into the connecting cavity, and the pipeline is inserted through the casing port into the connecting cavity. This allows for the flow cavity of the connecting body to be in communication with the pipe cavity of the pipeline. The use of the casing alone simplifies the connection between the pipeline and the connecting body, ensuring stability and safety in the connection between the pipeline and the connecting body. This makes the operation simple and convenient, thereby improving the efficiency and convenience of pipeline connection. Additionally, if there is a leakage between the connecting body and the pipeline, the casing at the connection point between the connecting body and the pipeline can act as a protective barrier, to some extent, to contain the further spread of the leak, thus enhancing the safety of the pipeline connection structure.

### Brief Description of Drawings

The drawings forming a part of the present disclosure are provided to enhance the understanding of the present disclosure. The illustrative embodiments and their explanations of the present disclosure are intended to explain the present disclosure and do not constitute improper limitations on the present disclosure.

To provide a clearer understanding of the technical solution of the embodiments of the present disclosure, the following brief introduction of the drawings in the embodiments of the present disclosure will be presented. It is evident that the described drawings below are merely some embodiments of the present disclosure. Those skilled in the art can obtain additional drawings based on the described drawings without the need for inventive effort.
FIG. 1 shows a structural schematic diagram of a pipeline connection structure in an embodiment not covered by the claims;
FIG. 2 shows a structural exploded view of the pipeline connection structure in the embodiment of FIG. 1;
FIG. 3 shows a sectional view of a component of the pipeline connection structure in the embodiment of FIG. 1;
FIG. 4 shows a structural exploded view of the pipeline connection structure in an embodiment of the invention; and
FIG. 5 shows a sectional view of a component of the pipeline connection structure in the embodiment of FIG. 4.

The components in the drawings are labeled as follows:
10-pipeline connection structure; 100-connection assembly; 110-connecting body; 111-connecting groove; 120-casing; 121-connecting cavity; 122-groove; 130-flow cavity; 131-tooth groove; 200-inner supporting member; 210-inner cavity; 220-convex tooth; 300-positioning ring; 400-pressure sleeve; 500-sealing ring; 600-convex ring; 700-cushioning member; 800-pipeline; 810-pipe cavity.

### Detailed Description of Embodiments

In order to make the above objects, features, and advantages of the present disclosure more apparent and understandable, specific embodiments of the present disclosure are described in detail below in conjunction with the drawings. Many specific details are set forth in the following description to facilitate a full understanding of the present disclosure. However, the present disclosure can be implemented in many other ways different from those described herein, and those skilled in the art can make similar improvements without violating the connotations of the present disclosure, and thus the present disclosure is not limited by the specific embodiments disclosed below.

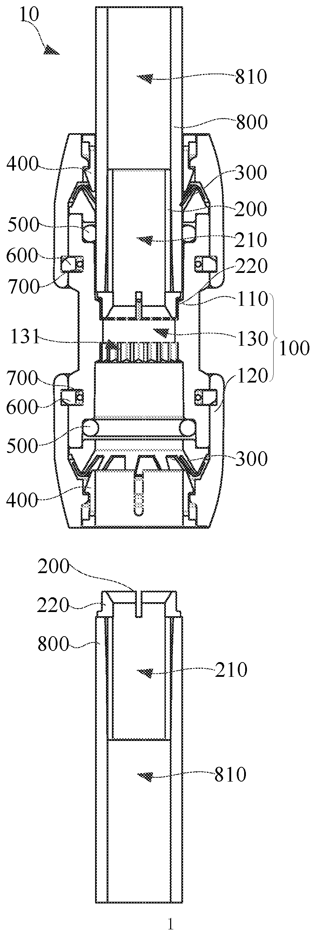

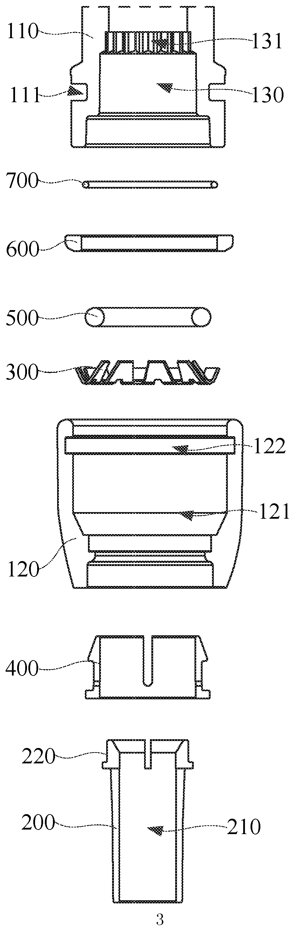

Referring to FIGS. 1 and 3, a pipeline supply system in an embodiment comprises a pipeline 800 and a pipeline connection structure 10, wherein the pipeline 800 is provided therein with a pipe cavity 810. The pipeline connection structure 10 comprises a connecting body 110 and a casing 120. The connecting body 110 is provided therein with a flow cavity 130, wherein the flow cavity 130 is configured to communicate with pipe cavity 810 of the pipeline 800. One end of the casing 120 is a casing end, and another end of the casing 120 is a connecting end. A connecting cavity 121 is provided within the casing 120, and the connecting cavity 121 extends through the casing end to form a casing port. The casing port is configured for the penetration of the pipeline 800, and the casing end is configured to be snapped onto the pipeline 800. The connecting cavity 121 extends through the connecting end to form a connecting port. The connecting body 110 inserts through the connecting port into the connecting cavity 121, and the connecting end can be snapped onto the connecting body 110.

In the supply system for pipeline 800 and its pipeline connection structure 10 mentioned above, when it is necessary to connect the pipeline 800, the connecting body 110 is inserted through the connecting port into the connecting cavity 121, and the pipeline 800 is inserted through the casing port into the connecting cavity 121. This allows for the flow cavity 130 of the connecting body 110 to be in communication with the pipe cavity 810 of the pipeline 800. The use of the casing 120 alone simplifies the connection between the pipeline 800 and the connecting body 110, ensuring stability and safety in the connection between the pipeline 800 and the connecting body 110. This makes the operation simple and convenient, thereby improving the efficiency and convenience of connection for pipeline 800. Additionally, if there is a leakage between the connecting body 110 and the pipeline 800, the casing 120 at the connection point between the connecting body 110 and the pipeline 800 can act as a protective barrier, to some extent, to contain the further spread of the leak, thus enhancing the safety of the pipeline connection structure 10.

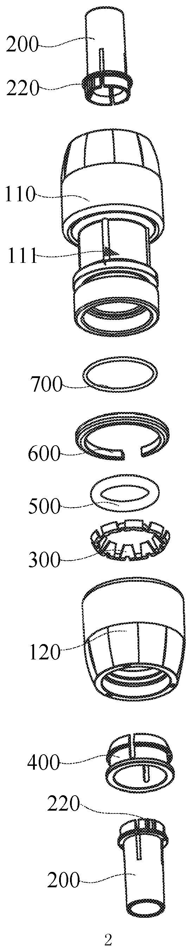

Referring to FIGS. 2 and 3, in one of the embodiments, the pipeline connection structure 10 further comprises a convex ring 600. The convex ring 600 is sleeved on an outer surface of the connecting body 110, and a groove 122 is provided on an inner wall of a portion of the connecting cavity 121 located on the connecting end. The convex ring 600 can be snapped into the groove 122. In another embodiment, the pipeline connection structure 10 further comprises a convex ring 600. The convex ring 600 is arranged on an inner wall of a portion of the connecting cavity 121 located on the connecting end, and a groove 122 is formed on an outer surface of the connecting body 110. The convex ring 600 can be snapped into the groove 122. The connection between the casing 120 and the connecting body 110 is achieved solely through the cooperation of the convex ring 600 and the groove 122. This connection method is convenient and quick, thereby reducing the structural complexity of the pipeline connection structure 10 and enhancing the practicality of the pipeline connection structure 10.

Further, as shown in FIGS. 2 and 3, a connecting groove 111 is formed on the outer surface of the connecting body 110, and the convex ring 600 can be snapped into the connecting groove 111. An outer diameter size of the convex ring 600 is larger than an outer diameter size of the connecting body 110. When the convex ring 600 is snapped into the connecting groove 111, because the outer diameter size of the convex ring 600 is larger than the outer diameter size of the connecting body 110, a portion of the convex ring 600 protrudes outside the connecting groove 111. This allows the convex ring 600 to be snapped into the groove 122, thereby achieving a stable connection between the connecting body 110 and the casing 120. The simultaneous snapping of the convex ring 600 into the connecting groove 111 and the groove 122 simplifies and speeds up the connection between the connecting body 110 and the casing 120.

Specifically, the convex ring 600 is a C-shaped convex ring, and the C-shaped convex ring can undergo elastic deformation when subjected to force. One side of the C-shaped convex ring is provided with an opening, and the size of the opening is smaller than the outer diameter size of the connecting body 110. The connecting body 110 is inserted through the opening and arranged inside the C-shaped convex ring. When the connecting body 110 is passed through the opening, even though the size of the opening is smaller than the outer diameter size of the connecting body 110, the C-shaped convex ring can undergo elastic deformation when subjected to force so that the C-shaped convex ring can be snapped into the connecting groove 111 of the connecting body 110. The quick installation of the convex ring 600 on the connecting body 110 is achieved and the convenience of using the pipeline connection structure 10 is enhanced.

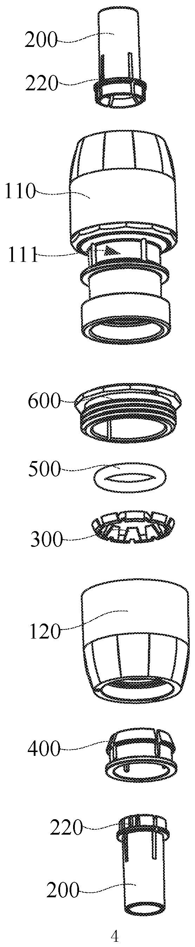

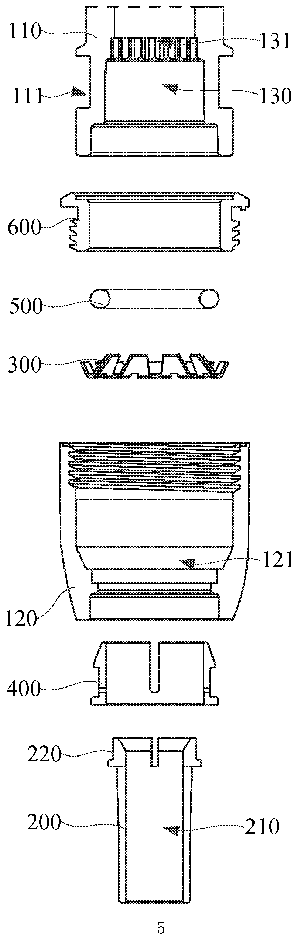

Referring to FIGS. 4 and 5, the convex ring 600 is a C-shaped threaded convex ring, and the C-shaped threaded convex ring can undergo elastic deformation under force. One side of the C-shaped threaded convex ring is provided with an opening, and the size of the opening is smaller than the outer diameter size of the connecting body 110. The connecting body 110 is inserted through the opening and arranged inside the C-shaped threaded convex ring. An outer surface of the C-shaped threaded convex ring is provided with external threads, and an inner wall of a portion of the connecting cavity 121, located on the connecting end, is provided with internal threads. The external threads and the internal threads can engage with each other. The C-shaped threaded convex ring can be snapped onto the connecting groove 111 of the connecting body 110 through the opening. The external threads on the C-shaped threaded convex ring allow the casing 120 to be detachably arranged on the connecting body 110, thereby enhancing the convenience of the connection between the connecting body 110 and the casing 120. This, in turn, enhances the practicality and reliability of the pipeline connection structure 10.

Referring to FIGS. 1 and 3, in one of the embodiments, the pipeline connection structure 10 further comprises a cushioning member 700. The cushioning member 700 is arranged between the inner wall of the connecting groove 111 and the outer surface of the convex ring 600, and the cushioning member 700 can undergo elastic deformation under force in the radial direction of the convex ring 600. The cushioning member 700 can cushion the pressure from the convex ring 600 on the connecting body 110 or the supporting force of the convex ring 600 on the casing 120, thus preventing excessive pressure or support force from causing the connecting body 110 and casing 120 to slip or disengage.

Referring to FIGS. 1 and 2, in one of the embodiments, the pipeline connection structure 10 further comprises an inner supporting member 200, wherein one end of the inner supporting member 200 is configured to be inserted into the pipe cavity 810 of the pipeline 800, and another end of the inner supporting member 200 can be snapped inside the flow cavity 130. The inner supporting member 200 is provided therein with an inner cavity 210, and the flow cavity 130 of the connection assembly 100 communicates with the pipe cavity 810 of the pipeline 800 through the inner cavity 210. When connecting the pipeline 800, the inner supporting member 200 is first inserted into the pipe cavity 810 of the pipeline 800, and then the pipeline 800 is inserted into the casing port of the connection assembly 100. At this point, one end of the inner supporting member 200 is arranged inside the pipe cavity 810 of the pipeline 800, and the other end of the inner supporting member 200 can be snapped inside the flow cavity 130 of the connection assembly 100. The pipe cavity 810 of the pipeline 800 communicates with the flow cavity 130 of the connection assembly 100 through the inner cavity 210 of the inner supporting member 200, thus establishing a connection between the pipeline 800 and the connection assembly 100. Typically, when connecting a pipeline 800, the end that the pipeline 800 needs to be connected may undergo some degree of deformation. Therefore, by arranging the inner supporting member 200 inside the pipe cavity 810 of the pipeline 800, the inner supporting member 200 can provide support to the pipeline 800, ensuring that the pipeline 800 does not deform during the connection process and thereby ensuring the construction quality of the pipeline 800. This, in turn, enhances the practicality and reliability of the pipeline connection structure 10.

Referring to FIGS. 2 and 3, further, an outer wall of the other end of the inner supporting member 200 snapped in the flow cavity 130 is provided with a convex tooth structure; an inner wall of the flow cavity 130 is provided with a tooth groove 131 corresponding to the convex tooth structure; and the convex tooth structure can be snapped into the tooth groove 131. Optionally, an inner wall of the flow cavity 130 is provided with a convex tooth structure, and an outer wall of the other end of the inner supporting member 200 snapped in the flow cavity 130 is provided with a tooth groove 131 corresponding to the convex tooth structure. The convex tooth structure can be snapped into the tooth groove 131. The cooperation of the convex tooth structure and the tooth groove 131 can somewhat enhance the structural stability of the pipeline connection structure. Specifically, the convex tooth structure is elastic, and the tooth groove 131 is a wave-shaped tooth groove. When the convex tooth structure is snapped into the tooth groove 131 and the pipeline 800 is rotated, the convex tooth will move between different tooth grooves 131, and thus the convex tooth produces vibrations and sounds. This indicates that the pipeline 800 has successfully matched with the connecting body 110. If no sound is heard when rotating the pipeline 800, it means that the pipeline 800 has not matched with the connecting body 110, and the pipeline 800 should be removed and reassembled.

In one of the embodiments, the pipeline connection structure 10 also comprises a positioning ring 300. The positioning ring 300 is configured to be sleeved on the pipeline 800. The positioning ring 300 is snapped on the inner wall of the connecting cavity 121. An inner diameter size of the positioning ring 300 is smaller than the outer diameter size of the pipeline 800. The positioning ring 300 can undergo elastic deformation under force, and after elastic deformation, the inner diameter size of the positioning ring 300 is larger than the outer diameter size of the pipeline 800. When the pipeline moves inside the connecting cavity 121, the outer diameter size of the pipeline is larger than the inner diameter size of the positioning ring 300, and the positioning ring 300 abuts against the outer surface of the pipeline. Simultaneously, the positioning ring 300 is snapped onto the inner wall of the connecting cavity 121, and the positioning ring 300 restricts the further movement of the pipeline, thus ensuring that the pipeline does not detach from the connecting cavity 121. This, in turn, enhances the stability and reliability of the pipeline connection structure 10. When it is necessary to pull the pipeline 800 out from the connection assembly 100, the positioning ring 300 can undergo elastic deformation, thus increasing the inner diameter size of the positioning ring 300 to be larger than the outer diameter size of the pipeline. This releases the restriction of the positioning ring 300 on the pipeline, thereby allowing the pipeline to be removed from the connecting cavity 121, such that the pipeline 800 can be pulled out from the connection assembly 100.

In one of the embodiments, an inner diameter size of a portion of the connecting cavity 121, located at the casing end, gradually decreases in the direction from the casing end toward the casing port. The outer diameter size of the positioning ring 300 is larger than the inner diameter size of the connecting cavity 121 located at the casing end. The positioning ring 300 enters the connecting cavity 121 from the side of the connecting cavity 121 which is away from the casing end. Since the inner diameter size of the connecting cavity 121 at the casing end is smaller than the outer diameter size of the positioning ring 300, it allows the positioning ring 300 to be snapped inside the connecting cavity 121 and prevents it from sliding out from the casing end. Additionally, the positioning ring 300 can also restrict the pipeline 800 from sliding out of the casing end, thus effectively improving the connection stability of the pipeline connection structure 10.

Referring to FIG. 1, in one of the embodiments, the pipeline connection structure 10 further comprises a pressure sleeve 400, wherein the pressure sleeve 400 can be movably arranged inside the connecting cavity 121. A movement direction of the pressure sleeve 400 is along the axis of the pipeline 800. The pressure sleeve 400 can be configured to be sleeved on the pipeline 800, and one end of the pressure sleeve 400, away from the casing end, can abut against the inner wall of the positioning ring 300, thus inducing elastic deformation in the positioning ring 300 when the pressure sleeve 400 moves. One end of the pressure sleeve 400, which is away from the casing end, can abut against the inner wall of the positioning ring 300. By moving the pressure sleeve 400 within the connecting cavity 121, the positioning ring 300 is pushed open, thereby increasing the inner diameter size of the positioning ring 300 to be larger than the outer diameter size of the pipeline 800. Therefore, the restriction applied by the positioning ring 300 on the pipeline 800 is released. The elastic deformation of the positioning ring 300 by the pressure sleeve 400 enables disassembly between the pipeline 800 and the connection assembly 100, thus improving the practicality and ease of use of the pipeline connection structure 10.

Specifically, as shown in FIGS. 1 and 3, the shape of the positioning ring 300 is in a shape of circular truncated cone, and the smaller circumference side of the positioning ring 300 in the shape of circular truncated cone is pressed against the outer surface of the pipeline 800. The pressure sleeve 400 can abut against the larger circumference side of the positioning ring 300. The outer diameter size of the pressure sleeve 400 is equal to or greater than the outer diameter size of the pipeline 800. The pressure sleeve 400 can move from the larger circumference side of the positioning ring 300 towards the smaller circumference side, thereby increasing the inner diameter size of the positioning ring 300 and releasing the restriction of the limiting piece on the pipeline 800. The positioning ring 300 in a shape of circular truncated cone allows the pressure sleeve 400 to change the shape of the positioning ring 300, thereby improving the structural rationality and practicality of the pipeline connection structure 10.

In one of the embodiments, the pipeline connection structure 10 further comprises a sealing ring 500. The sealing ring 500 is snapped inside the connecting cavity 121, and the sealing ring 500 is positioned at a position where the pipeline 800 abuts against the connecting body 110. The sealing ring 500 is configured to prevent leakage at the point of contact between the pipeline 800 and the connecting body 110, thus enhancing the sealing and safety of the pipeline connection structure 10.

In one of the embodiments, the number of the pipeline 800 is at least two, and the number of the casing 120 corresponds to the number of pipeline 800. The number of the inner supporting members 200 also corresponds to the number of pipeline 800. Each pipe cavity 810 of each pipeline 800 is provided with one inner supporting member 200. Each pipeline 800 is connected to the connecting body 110 via one casing 120. The pipe cavities 810 of at least two pipelines 800 are all in communication with the connecting cavity 121 of the connecting body 110 through the inner cavity 210 of the inner supporting member 200. The pipeline connection structure 10 can simultaneously connect multiple pipeline 800 or multiple devices, thereby significantly expanding the application scope of the pipeline connection structure 10.

In the above example, the pressure sleeve 400 is initially arranged at the casing port of the casing 120, and the positioning ring 300 is subsequently placed into the connecting cavity 121 from the connecting port of the casing 120, such that the positioning ring 300 is snapped onto the inner wall of the connecting cavity 121. The sealing ring 500 is then placed inside. Simultaneously, the convex ring 600 is arranged inside the connecting groove 111 of the connecting body 110 in a manner of sleeving. Subsequently, the connecting body 110 is passed through the connecting port of the casing 120, with the convex ring 600 snapped into the groove 122 of the casing 120 on the side opposite to the connecting groove 111, thereby making the casing 120 snapped onto the connecting body 110. The inner supporting member 200 is finally inserted into the pipe cavity 810 of the pipeline 800. Starting from the casing port of the casing 120, one end of the pipeline 800 where the inner supporting member 200 is passed through is successively passed through the pressure sleeve 400, the positioning ring 300, and the sealing ring 500. This process continues until the convex tooth 220 on the inner supporting member 200 engages with the tooth groove 131 on the inner wall of the connecting cavity 121, such that the assembly between the pipeline 800 and the connecting body 110 is completed. Furthermore, when the pipeline 800 is rotated, if a sound is produced between the convex tooth 220 and the tooth groove 131, it indicates that the assembly between the pipeline 800 and the connecting body 110 is in place. If there is no sound, it signifies that the pipeline 800 and the connecting body 110 need to be reassembled.

When it is necessary to disassemble the pipeline 800 from the connecting body 110, simply moving the pressure sleeve 400 causes the positioning ring 300 to undergo elastic deformation. After the inner diameter size of the positioning ring 300 becomes larger than the outer diameter size of the inner support 200, the restriction effect of the positioning ring 300 on the inner supporting member 200 is released. This allows the pipeline 800 to be disassembled from the connecting body 110.

In the assembled state, the inner walls of the pressure sleeve 400, positioning ring 300, and sealing ring 500 are all pressed tightly against the outer surface of the pipeline 800. The connecting body 110 can be understood as a pump body, valve body, or other pipelines, and any device that can be connected via the pipeline connection structure 10 of the above embodiment should be understood as the connecting body 110.

In practice, the pipe connection structure 10 is used as an integral component, and the user only needs to pass the pipe 800 through the casing port into the pipeline connection structure 10, which is very convenient and greatly improves the efficiency of the connection of the pipelines.

In the description of the present disclosure, it is to be understood that the terms "center", "longitudinal", "lateral", "length ", "width", "thickness", "up", "down", "front", "back", "left", "right", "vertical ", "horizontal", "top", "bottom", "inside", "outer", "clockwise", "counterclockwise", "axial", "radial", "circumferential", etc. indicate orientations or positional relationships based on those shown in the drawings, and are intended only to facilitate the description of the present disclosure and to simplify the description, and are not intended to indicate or imply that the device or element referred to must have a particular orientation, be constructed and operated in a particular orientation, and therefore cannot be construed as a limitation of the present disclosure.

Additionally, the terms "first" and "second" are used for descriptive objectives only and should not be understood as indicating or implying relative importance or specifying the quantity of the indicated technical features. Thus, the features qualified with "first" and "second" may explicitly or implicitly include at least one such feature. In the description of the present disclosure, "multiple" means at least two, such as two, three, etc., unless otherwise expressly and specifically limited.

In the present disclosure, unless otherwise clearly stipulated and limited, the terms "mount", "link", "connect" and "fix" should be understood in a broad sense, for example, it can be a fixed connection, a detachable connection, or an integral connection; it can be a mechanical connection, an electrical connection, a direct connection, an indirect connection through an intermediary, an internal communication between two components, or the interaction relationship between two components, unless otherwise expressly limited. Those of ordinary skill in the art can understand the meanings of the above terms in the present disclosure according to specific situations.

In the present disclosure, unless otherwise expressly provided and limited, the first feature "on" or "under" the second feature may be a direct contact between the first and second features, or an indirect contact between the first and second features through an intermediate medium. Furthermore, the first feature being "above", "over" and "on top of" the second feature can mean that the first feature is directly above or diagonally above the second feature, or simply that the first feature is horizontally higher than the second feature. That the first feature being "under", "below" and "beneath" the second feature can mean that the first feature is directly below or diagonally below the second feature, or it can simply mean that the horizontal height of the first feature is less than that of the second feature.

It should be noted that when an element is said to be "fixed to" or "arranged on" another element, it may be directly on the other element or there may be a centered element. When an element is said to be "connected" to another element, it could be directly attached to the other element or may have an intermediary element. The terms "vertical", "horizontal", "up", "down", "left", "right", and similar expressions used herein are for illustrative purposes only and are not intended to be exclusive.

The various technical features of the above-mentioned embodiments can be combined, and for the sake of concise description, all possible combinations of the various technical features in the above-mentioned embodiments are not described.

The above-mentioned embodiments only express several implementation modes of the present disclosure, and the descriptions thereof are relatively specific and detailed, but should not be construed as limiting the patent scope of the present disclosure. It should be pointed out that those skilled in the art may make several modifications and improvements without departing from the concept of the present disclosure as defined in the appended claims.

## Claims

1. A pipeline connection structure (10), wherein the pipeline connection structure (10) comprises:
a connecting body (110), wherein the connecting body (110) is provided therein with a flow cavity (130), and the flow cavity (130) is configured to communicate with a pipe cavity (810) of a pipeline (800);
a casing (120), wherein one end of the casing (120) is a casing end, and another end of the casing (120) is a connecting end; a connecting cavity (121) is provided within the casing (120), and the connecting cavity (121) extends through the casing end to form a casing port; the casing port is configured for penetration of the pipeline (800), and the casing end is configured to be snapped onto the pipeline (800); the connecting cavity (121) extends through the connecting end to form a connecting port; and the connecting body (110) is inserted through the connecting port into the connecting cavity (121), and the connecting end is configured to be snapped onto the connecting body (110), and
a convex ring (600), wherein the convex ring (600) is arranged on an inner wall of a portion of the connecting cavity (121) located on the connecting end,
wherein a connecting groove (111) is formed on an outer surface of the connecting body (110), wherein the convex ring (600) is configured to be snapped into the connecting groove (111); and an outer diameter size of the convex ring (600) is larger than an outer diameter size of the connecting body (110),
**characterized in that**,
the convex ring (600) is a C-shaped threaded convex ring, wherein the C-shaped threaded convex ring is configured for undergoing an elastic deformation under a force; one side of the C-shaped threaded convex ring is provided with an opening, wherein a size of the opening is smaller than the outer diameter size of the connecting body (110); the connecting body (110) is inserted through the opening and arranged inside the C-shaped threaded convex ring; an outer surface of the C-shaped threaded convex ring is provided with external threads, and the inner wall of the portion of the connecting cavity (121), located on the connecting end, is provided with internal threads; and the external threads and the internal threads are configured for engaging with each other

2. The pipeline connection structure (10) according to claim 1, wherein the pipeline connection structure (10) further comprises an inner supporting member (200), wherein one end of the inner supporting member (200) is configured to be inserted in the pipe cavity (810) of the pipeline (800), and another end of the inner supporting member (200) is configured to be snapped inside the flow cavity (130); and the inner supporting member (200) is provided therein with an inner cavity (210), and the flow cavity (130) of the connection assembly (100) communicates with the pipe cavity (810) of the pipeline (800) through the inner cavity (210).

3. The pipeline connection structure (10) according to claim 2, wherein the pipeline connection structure (10) further comprises a positioning ring (300); the positioning ring (300) is configured to be sleeved on the pipeline (800); the positioning ring (300) is snapped on an inner wall of the connecting cavity (121); an inner diameter size of the positioning ring (300) is smaller than an outer diameter size of the pipeline (800); and the positioning ring (300) is configured for undergoing an elastic deformation under a force, and after the elastic deformation, the inner diameter size of the positioning ring (300) is larger than the outer diameter size of the pipeline (800).

4. The pipeline connection structure (10) according to claim 3, wherein an inner diameter size of a portion of the connecting cavity (121), located at the casing end, gradually decreases in a direction from the casing end toward the casing port; and an outer diameter size of the positioning ring (300) is larger than the inner diameter size of the connecting cavity (121) located at the casing end.

5. The pipeline connection structure (10) according to claim 4, wherein the pipeline connection structure (10) further comprises a pressure sleeve (400), wherein the pressure sleeve (400) is movably arranged inside the connecting cavity (121); a movement direction of the pressure sleeve (400) is along an axis of the pipeline (800); and the pressure sleeve (400) is configured to be sleeved on the pipeline (800), and one end of the pressure sleeve (400), away from the casing end, is configured for abutting against an inner wall of the positioning ring (300), thus inducing the elastic deformation in the positioning ring (300) when the pressure sleeve (400) moves; and/or an outer wall of the other end of the inner supporting member (200) snapped in the flow cavity (130) is provided with a convex tooth (220) structure; an inner wall of the flow cavity (130) is provided with a tooth groove (131) corresponding to the convex tooth (220) structure; and the convex tooth (220) structure is configured to be snapped into the tooth groove (131); or
an inner wall of the flow cavity (130) is provided with a convex tooth (220) structure, and an outer wall of the other end of the inner supporting member (200) snapped in the flow cavity (130) is provided with a tooth groove (131) corresponding to the convex tooth (220) structure; and the convex tooth (220) structure is configured to be snapped into the tooth groove (131).

6. A pipeline supply system, **characterized in that** the pipeline supply system comprises:
a pipeline (800), wherein the pipeline (800) is provided therein with a pipe cavity (810); and
the pipeline connection structure (10) according to any one of claims 1 to 5, wherein the pipeline (800) is inserted through the casing port, and the casing end is snapped onto the pipeline (800); and the pipe cavity (810) is in communication with the flow cavity (130).

## Patentansprüche

1. Rohrleitungsverbindungsstruktur (10), wobei die Rohrleitungsverbindungsstruktur (10) Folgendes umfasst:
einen Verbindungskörper (110), wobei der Verbindungskörper (110) darin mit einem Strömungshohlraum (130) versehen ist, und der Strömungshohlraum (130) so eingerichtet ist, dass er mit einem Rohrhohlraum (810) einer Rohrleitung (800) in Verbindung steht;
ein Gehäuse (120), wobei ein Ende des Gehäuses (120) ein Gehäuseende, und ein anderes Ende des Gehäuses (120) ein Verbindungsende ist; ein Verbindungshohlraum (121) innerhalb des Gehäuses (120) vorgesehen ist, und der Verbindungshohlraum (121) sich durch das Gehäuseende erstreckt, um einen Gehäuseanschluss zu bilden; der Gehäuseanschluss so eingerichtet ist, dass er die Rohrleitung (800) durchdringt, und das Gehäuseende so eingerichtet ist, dass es auf der Rohrleitung (800) eingerastet ist; der Verbindungshohlraum (121) sich durch das Verbindungsende erstreckt, um einen Verbindungsanschluss zu bilden; und der Verbindungskörper (110) durch die Verbindungsöffnung in den Verbindungshohlraum (121) eingeführt wird, und das Verbindungsende so eingerichtet ist, dass es auf den Verbindungskörper (110) eingerastet ist, und
einen konvexen Ring (600), wobei der konvexe Ring (600) an einer Innenwand eines Abschnitts des Verbindungshohlraums (121) angeordnet ist, der sich an dem Verbindungsende befindet,
wobei eine Verbindungsnut (111) an der Außenfläche des Verbindungskörpers (110) gebildet ist, wobei der konvexe Ring (600) so eingerichtet ist, dass er in die Verbindungsnut (111) eingerastet werden kann; und der Außendurchmesser des konvexen Rings (600) größer ist als der Außendurchmesser des Verbindungskörpers (110),
**dadurch gekennzeichnet, dass**
der konvexe Ring (600) ein C-förmiger, gewindeloser konvexer Ring ist, wobei der C-förmige, gewindelose konvexe Ring so eingerichtet ist, dass er unter einer Kraft eine elastische Verformung erfährt; eine Seite des C-förmigen, gewindelosen konvexen Rings mit einer Öffnung versehen ist, wobei eine Größe der Öffnung kleiner ist als die Größe des Außendurchmessers des Verbindungskörpers (110); der Verbindungskörper (110) durch die Öffnung eingeführt wird und in dem Inneren des C-förmigen,
gewindelosen konvexen Ring angeordnet ist; die Außenfläche des C-förmigen, gewindelosen konvexen Rings mit Außengewinden versehen ist, und die Innenwand des Abschnitts des Verbindungshohlraums (121), der sich an dem Verbindungsende befindet, mit internen Gewinden versehen ist; die Außengewinde und die internen Gewinde so eingerichtet sind, dass sie miteinander in Eingriff treten.

2. Rohrleitungsverbindungsstruktur (10) nach Anspruch 1, wobei die Rohrleitungsverbindungsstruktur (10) ferner ein inneres Stützelement (200) umfasst, wobei ein Ende des inneren Stützelements (200) so eingerichtet ist, dass es in den Rohrhohlraum (810) der Rohrleitung (800) eingeführt wird, und ein anderes Ende des inneren Stützelements (200) so eingerichtet ist, dass es in dem Inneren des Strömungshohlraums (130) eingerastet wird; und das innere Stützelement (200) mit einem Innenhohlraum (210) versehen ist, wobei der Strömungshohlraum (130) der Verbindungsbaugruppe (100) über den Innenhohlraum (210) mit dem Rohrhohlraum (810) der Rohrleitung (800) in Verbindung steht.

3. Rohrleitungsverbindungsstruktur (10) nach Anspruch 2, wobei die Rohrleitungsverbindungsstruktur (10) ferner einen Positionierungsring (300) umfasst; der Positionierungsring (300) so eingerichtet ist, dass er auf der Rohrleitung (800) ummantelt ist; der Positionierungsring (300) an der Innenwand des Verbindungshohlraums (121) einrastet; der Innendurchmesser des Positionierungsrings (300) kleiner ist als der Außendurchmesser der Rohrleitung (800); und der Positionierungsring (300) so eingerichtet ist, dass er unter einer Kraft elastisch verformt wird, und nach der elastischen Verformung der Innendurchmesser des Positionierungsrings (300) größer ist als der Außendurchmesser der Rohrleitung (800).

4. Rohrleitungsverbindungsstruktur (10) nach Anspruch 3, wobei ein Innendurchmesser eines Abschnitts des Anschlusshohlraums (121), der sich am Gehäuseende befindet, allmählich von dem Gehäuseende in Richtung des Gehäuseanschlusses abnimmt; und die Größe des Außendurchmessers des Positionierungsrings (300) größer ist als der Innendurchmesser des Anschlusshohlraums (121), der sich am Gehäuseende befindet.

5. Rohrleitungsverbindungsstruktur (10) nach Anspruch 4, wobei die Rohrleitungsverbindungsstruktur (10) ferner eine Druckhülse (400) umfasst, wobei die Druckhülse (400) in dem Inneren des Verbindungshohlraums (121) beweglich angeordnet ist; eine Bewegungsrichtung der Druckhülse (400) entlang einer Achse der Rohrleitung (800) liegt; und die Druckhülse (400) so eingerichtet ist, dass sie auf der Rohrleitung (800) ummantelt ist, und ein Ende der Druckhülse (400), das von dem Gehäuseende entfernt ist, so eingerichtet ist, dass es an einer Innenwand des Positionierungsrings (300) anliegt, wodurch die elastische Verformung in dem Positionierungsring (300) induziert wird, wenn sich die Druckhülse (400) bewegt; und/oder
eine Außenwand des anderen Endes des inneren Stützelements (200), das in den Strömungshohlraum (130) eingerastet ist, mit einer konvexen Zahnstruktur (220) versehen ist; eine Innenwand des Strömungshohlraums (130) mit einer Zahnnut (131) versehen ist, die der konvexen Zahnstruktur (220) entspricht; und die konvexe Zahnstruktur (220) so eingerichtet ist, dass sie in die Zahnnut (131) eingerastet werden kann; oder
eine Innenwand des Strömungshohlraums (130) mit einer konvexen Zahnstruktur (220) versehen ist, während die Außenwand des anderen Endes des in dem Strömungshohlraum (130) eingerasteten inneren Stützelements (200) mit einer Zahnnut (131) versehen ist, die der konvexen Zahnstruktur (220) entspricht; die konvexe Zahnstruktur (220) so eingerichtet ist, dass sie in die Zahnnut (131) eingerastet werden kann.

6. Rohrleitungsversorgungssystem, **dadurch gekennzeichnet, dass** das Rohrleitungsversorgungssystem Folgendes umfasst:
eine Rohrleitung (800), wobei die Rohrleitung (800) darin mit einem Rohrhohlraum (810) versehen ist; und
die Rohrleitungsverbindungsstruktur (10) nach einem der Ansprüche 1 bis 5, wobei die Rohrleitung (800) durch den Gehäuseanschluss eingeführt wird und das Gehäuseende auf die Rohrleitung (800) eingerastet ist; und der Rohrhohlraum (810) in Verbindung mit dem Strömungshohlraum (130) steht.

## Revendications

1. Structure de raccordement de conduite (10), dans laquelle la structure de raccordement de conduite (10) comprend :
un corps de raccordement (110), dans laquelle le corps de raccordement (110) est pourvu dans celui-ci d'une cavité d'écoulement (130), et la cavité d'écoulement (130) est configurée pour communiquer avec une cavité de tuyau (810) d'une conduite (800) ;
un boîtier (120), dans laquelle une extrémité du boîtier (120) est une extrémité de boîtier, et une autre extrémité du boîtier (120) est une extrémité de raccordement ; une cavité de raccordement (121) est fournie dans le boîtier (120), et la cavité de raccordement (121) s'étend à travers l'extrémité de boîtier pour former un orifice de boîtier ;
l'orifice de boîtier est configuré pour une pénétration par la conduite (800), et l'extrémité de boîtier est configurée pour être encliquetée sur la conduite (800) ;
la cavité de raccordement (121) s'étend à travers l'extrémité de raccordement pour former un orifice de raccordement ; et le corps de raccordement (110) est inséré via l'orifice de raccordement dans la cavité de raccordement (121), et l'extrémité de raccordement est configurée pour être encliquetée sur le corps de raccordement (110), et
une bague convexe (600), dans laquelle la bague convexe (600) est agencée sur une paroi intérieure d'une partie de la cavité de raccordement (121) située sur l'extrémité de raccordement,
dans laquelle une rainure de raccordement (111) est formée sur une surface extérieure du corps de raccordement (110), dans laquelle la bague convexe (600) est configurée pour être encliquetée dans la rainure de raccordement (111) ;
et une taille de diamètre extérieur de la bague convexe (600) est plus grande qu'une taille de diamètre extérieur du corps de raccordement (110),
**caractérisée en ce que**
la bague convexe (600) est une bague convexe filetée en forme de C, dans laquelle la bague convexe filetée en forme de C est configurée pour subir une déformation élastique sous une force ; un côté de la bague convexe filetée en forme de C est pourvu d'une ouverture, dans laquelle une taille de l'ouverture est plus petite que la taille de diamètre extérieur du corps de raccordement (110) ; le corps de raccordement (110) est inséré dans l'ouverture et
agencé à l'intérieur de la bague convexe filetée en forme de C ; une surface extérieure de la bague convexe filetée en forme de C est pourvue de filetages externes, et la paroi intérieure de la partie de la cavité de raccordement (121), située sur l'extrémité de raccordement, est pourvue de filetages internes ; et les filetages externes et les filetages internes sont configurés pour venir en prise les uns avec les autres.

2. Structure de raccordement de conduite (10) selon la revendication 1, dans laquelle la structure de raccordement de conduite (10) comprend en outre un élément de support intérieur (200), dans laquelle une extrémité de l'élément de support intérieur (200) est configurée pour être insérée dans la cavité de tuyau (810) de la conduite (800), et une autre extrémité de l'élément de support intérieur (200) est configurée pour être encliquetée à l'intérieur de la cavité d'écoulement (130) ; et l'élément de support intérieur (200) est pourvu dans celui-ci d'une cavité intérieure (210), et la cavité d'écoulement (130) de l'ensemble de raccordement (100) communique avec la cavité de tuyau (810) de la conduite (800) par l'intermédiaire de la cavité intérieure (210).

3. Structure de raccordement de conduite (10) selon la revendication 2, dans laquelle la structure de raccordement de conduite (10) comprend en outre une bague de positionnement (300) ; la bague de positionnement (300) est configurée pour être glissée sur la conduite (800) ; la bague de positionnement (300) est encliquetée sur une paroi intérieure de la cavité de raccordement (121) ; une taille de diamètre intérieur de la bague de positionnement (300) est plus petite qu'une taille de diamètre extérieur de la conduite (800) ; et la bague de positionnement (300) est configurée pour subir une déformation élastique sous une force, et après la déformation élastique, la taille de diamètre intérieur de la bague de positionnement (300) est plus grande que la taille de diamètre extérieur de la conduite (800).

4. Structure de raccordement de conduite (10) selon la revendication 3, dans laquelle une taille de diamètre intérieur d'une partie de la cavité de raccordement (121), située à l'extrémité de boîtier, diminue progressivement dans une direction depuis l'extrémité de boîtier vers l'orifice de boîtier ; et une taille de diamètre extérieur de la bague de positionnement (300) est plus grande que la taille de diamètre intérieur de la cavité de raccordement (121) située à l'extrémité de boîtier.

5. Structure de raccordement de conduite (10) selon la revendication 4, dans laquelle la structure de raccordement de conduite (10) comprend en outre un manchon de pression (400), dans laquelle le manchon de pression (400) est agencé de manière mobile à l'intérieur de la cavité de raccordement (121) ; une direction de déplacement du manchon de pression (400) est le long d'un axe de la conduite (800) ; et le manchon de pression (400) est configuré pour être glissé sur la conduite (800), et une extrémité du manchon de pression (400), éloignée de l'extrémité de boîtier, est configurée pour venir buter contre une paroi intérieure de la bague de positionnement (300), provoquant ainsi la déformation élastique dans la bague de positionnement (300) lorsque le manchon de pression (400) se déplace ; et/ou
une paroi extérieure de l'autre extrémité de l'élément de support intérieur (200) encliquetée dans la cavité d'écoulement (130) est pourvue d'une structure de dent convexe (220) ; une paroi intérieure de la cavité d'écoulement (130) est pourvue d'une rainure de dent (131) correspondant à la structure de dent convexe (220) ; et la structure de dent convexe (220) est configurée pour être encliquetée dans la rainure de dent (131) ; ou
une paroi intérieure de la cavité d'écoulement (130) est pourvue d'une structure de dent convexe (220), et une paroi extérieure de l'autre extrémité de l'élément de support intérieur (200) encliquetée dans la cavité d'écoulement (130) est pourvue d'une rainure de dent (131) correspondant à la structure de dent convexe (220) ; et la structure de dent convexe (220) est configurée pour être encliquetée dans la rainure de dent (131).

6. Système d'alimentation de conduite, **caractérisé en ce que** le système d'alimentation de conduite comprend :
une conduite (800), dans lequel la conduite (800) est pourvue dans celle-ci d'une cavité de tuyau (810) ; et
la structure de raccordement de conduite (10) selon l'une quelconque des revendications 1 à 5, dans lequel la conduite (800) est insérée dans l'orifice de boîtier, et l'extrémité de boîtier est encliquetée sur la conduite (800) ; et la cavité de tuyau (810) est en communication avec la cavité d'écoulement (130).
